# EUROPÄISCHE PATENTSCHRIFT

(11) **EP 2 643 645 B1**
(45) Veröffentlichungstag und Bekanntmachung des Hinweises auf die Patenterteilung: **29.07.2020**
(21) Anmeldenummer: 11819077.6
(22) Anmeldetag: 23.11.2011
(51) Int. Cl.: F25B 43/04

(54) **Adsorptionskältemaschine mit einem Vakuumbehälter zur Entfernung von Fremdgasen**
Adsorption chiller with a vacuum container for removing foreign gases
Machine frigorifique à adsorption avec une cuve à vide permettant d'éliminer les gaz étrangers

(30) Priorität: 23.11.2010 DE 102010052424
(43) Veröffentlichungstag der Anmeldung: 02.10.2013
(73) Patentinhaber: InvenSor GmbH, 13355 Berlin (DE)
(72) Erfinder: BRAUNSCHWEIG, Niels, 10119 Berlin (DE); PAULUSSEN, Sören, 10405 Berlin (DE); KONTOGEORGOPOULOS, Eythymios, 12045 Berlin (DE)
(74) Vertreter: Hertin und Partner Rechts- und Patentanwälte PartG mbB
(86) Internationale Anmeldenummer: PCT/DE2011/075285
(87) Internationale Veröffentlichungsnummer: WO 2012/069048

(56) Entgegenhaltungen:
- DE-B3- 10 310 748
- JP-A- 2000 292 033
- JP-A- 2002 048 436
- US-A- 5 636 526

## Beschreibung

Die Erfindung betrifft eine Adsorptionskältemaschine mit einem Vakuumbehälter zur Entfernung von Fremdgasen aus einer Adsorptionskältemaschine, wobei der Vakuumbehälter über dampfoffene Verbindungsmittel mit einer Kondensator-Einheit der Adsorptionskältemaschine verbunden ist und der Behälter eine Ablasseinrichtung und mindestens ein Kühlelement aufweist, wobei in dem Verbindungsmittel mindestens ein Bauteil zur Absperrung oder Regelung des Durchflusses von Fluiden vorliegt. Weiterhin betrifft die Erfindung ein Verfahren zum Entfernen von Fremdgas aus einer Adsorptionskältemaschine.

Im Stand der Technik sind Kältemaschinen beschrieben, die im Allgemeinen der Beheizung und/oder der Kühlung von Gebäuden dienen. Kältemaschinen realisieren thermodynamische Kreisprozesse, bei denen beispielsweise Wärme unterhalb der Umgebungstemperatur aufgenommen und bei einer höheren Temperatur abgegeben wird. Die thermodynamischen Kreisprozesse ähneln denen einer Wärmepumpe. Im Stand der Technik bekannte Kältemaschinen sind z. B. Adsorptionskälteanlagen, (Diffusions-) Absorptionskältemaschinen sowie Kompressionskälteanlagen.

Die Adsorptionskältemaschine besteht mindestens aus einer Ad-/Desorber-Einheit, einem Verdampfer, einem Kondensator und/oder einer kombinierten Verdampfer/Kondensator-Einheit, die in einem gemeinsamen Behälter oder in getrennten Behältern untergebracht sind, welche dann mit Rohren o. ä. für die Kältemittelströmung miteinander verbunden sind. Der Vorteil der Sorptionsmaschinen gegenüber konventioneller Wärmepumpentechnik liegt darin, dass der Ablauf der Adsorption/Desorption allein durch die Temperierung des Sorptionsmittels erfolgt. Somit kann der Behälter der Adsorptionsmaschine hermetisch und gasdicht abgeschlossen sein. Bei Verwendung von beispielsweise Wasser als Kältemittel arbeitet die Adsorptionskältemaschine vorzugsweise im Unterdruckbereich.

Die in einer Adsorptionsmaschine stattfindende Adsorption beschreibt einen physikalischen Prozess, bei dem sich ein gasförmiges Kältemittel (beispielsweise Wasserdampf) an einen Feststoff anlagert. Die Desorption des Kältemittels, das heißt das Lösen des Kältemittels von dem Feststoff, benötigt wiederum Energie. In einer Adsorptionskältemaschine wird das Kältemittel, welches bei niedriger Temperatur und niedrigem Druck Wärme aufnimmt und bei höherer Temperatur und höherem Druck Wärme abgibt, so gewählt, dass mit der Adbeziehungsweise Desorption eine Aggregatzustandsänderung einhergeht. Als Adsorptionsmittel sind im Stand der Technik Stoffe beschrieben, die feinporös sind und demzufolge eine sehr große innere Oberfläche besitzen. Vorteilhafte Materialien sind Aktivkohle, Zeolithe, Aluminiumoxid oder Silikagel, Aluminiumphosphate, Silika-Aluminiumphosphate, Metall-Silika-Aluminiumphosphate, Mesostruktur Silikate, Metallorganische Gerüste und/oder mikroporöses Material, umfassend mikroporöse Polymere. Das Adsorptionsmaterial kann vorteilhafterweise unterschiedlich appliziert sein, das heißt es kann sich um eine Schüttung, eine Klebung und/oder Kristallisation handeln. Durch diese unterschiedlichen Applizierungsarten kann die Adsorptionsmaschine an unterschiedliche Anforderungen angepasst werden. So kann die Maschine an den Standort oder das Kältemittel angepasst werden. Außerdem ist die Schichtdicke des Adsorptionsmaterials für die Leistung der Adsorptionsmaschine entscheidend.

Im Prozess der Adsorptionsmaschine muss die Adsorptionswärme und die Kondensationswärme aus der Anlage abgeführt werden. Dies geschieht in der Regel über ein strömendes Wärmeträgermedium, das diese Wärme zu einer Wärmesenke transportiert, z.B. zu einem Rückkühlwerk (Rückkühlkreis), welches die Wärme an die Umgebungsluft abgibt. Wird jedoch die Adsorptionswärme und/oder die Kondensationswärme nicht bzw. schlecht abgeführt, würden die Temperaturen und damit die Drücke innerhalb der Adsorptionsmaschine steigen und der Adsorptionsprozess käme zum Erliegen. Somit kann der Wirkungsgrad einer Adsorptionsmaschine durch eine verbesserte Wärmeübertragung erheblich erhöht werden, was zwangsläufig auch die Wirtschaftlichkeit der Anlage verbessert. Analog dazu wird die Kälte über ein strömendes Wärmeträgermedium über einen Kältekreis zu einer Wärmequelle geführt.

Für die Verdampfung in Sorptionsmaschinen ist in der Regel ein Vakuumbehälter notwendig, da z. B. Wasser als Kältemittel eingesetzt werden kann und demgemäß niedrige Drücke erforderlich sind.

Eine Adsorptionskältemaschine kann weiterhin eine Rückführeinrichtung aufweisen, die dazu dient, dass unter der Aufrechterhaltung einer je nach Betriebsbedingungen schwankenden Druckdifferenz, ein Abführen eines Fluides, insbesondere eines Kältemittels, zwischen verschiedenen Komponenten der Adsorptionskälteanlage sichergestellt ist. Hierdurch ist ein kontinuierlicher Fluss des Fluides garantiert. Diese Rückführeinrichtung ist insbesondere für die Rückführung des verflüssigten Kältemittels aus dem Kondensator in den Verdampfer von Bedeutung, da nur so ein Kältemittelkreislauf in der Anlage bestehen bleibt.

Ein Verfahren zum Betreiben einer Adsorptionskältemaschine ist z. B. aus der DE 34 08 193 A1 bekannt. Das Verfahren dient zum Erhöhen der Temperatur von Wärme, bei dem ein erster und zweiter Austreiber (Adsorber) periodisch zwischen der Adsorptions- und Desorptionsphase geschaltet und in entgegengesetzten Phasen betrieben werden. Vor dem Austausch der Wirkungsweisen der beiden Absorber wird ein zweistufiger interner Wärmeaustausch ausgeführt. Dieser interne Wärmeaustausch umfasst zunächst einen Druckausgleichsschritt und eine darauffolgende Wärmeübertragung durch eine Wärmeübertragungsschleife. Nachdem ein Wärmeabgleich zwischen den beiden Absorbern erreicht worden ist, wird der Prozess fortgeführt. Das heißt, nach dem Umschalten zwischen der Adsorptions- und der Desorptionsphase wird zur Ausnutzung der nach der Desorptionsphase verbleibenden Wärme ein Temperaturausgleich zwischen den Adsorbern ausgeführt.

Nach der DE 34 25 419 A1 sind Heiz- und Kühlverfahren bekannt, die nach diesem Sorptionsprinzip arbeiten. Diese Verfahren laufen alle in geschlossenen Systemen ab (Vakuumgehäuse), wobei der erforderliche Unterdruck, um das Arbeitsmittel bei entsprechend tiefen Temperaturen verdampfen zu lassen, bei der Herstellung des Systems erzeugt wird. Ein hermetisch geschlossenes System soll auch während der dem Sorptionsprozess folgenden Desorptionsphase hermetisch dicht bleiben. Zwischen Sorptionsmittelbehälter und Arbeitsmittelbehälter kann sich eine Absperreinrichtung befinden, welche im geschlossenen Zustand den Sorptionsvorgang verhindert. Wird die Absperreinrichtung geöffnet, kann der Sorptionsvorgang und die damit verbundene Kälte- bzw. Wärmeerzeugung beginnen.

In einem Sorptionssystem befindliche Materialien und Stoffe können ausgasen oder zum Beispiel durch chemische Umwandlung Gase freisetzen. Diese störenden Gase oder Dämpfe verhindern einen schnellen Sorptionsvorgang, da sie bei der Adsorption den Zutritt des dampfförmigen Arbeitsmittels zum Sorptionsmittel erschweren sowie bei der Desorption den Zutritt des dampfförmigen Arbeitsmittels zu den Kondensationsflächen verhindern oder erschweren, was beides zu einer extremen Verlangsamung der Kälte- bzw. Wärmeerzeugung führt. Ein erheblicher Leistungsabfall dieser Sorptionssysteme ist die Folge. Als störende Gase bezeichnet man dabei ganz allgemein Stoffe, die den Zutritt des Arbeitsmitteldampfes zum Sorptionsmittel beeinflussen und somit den Sorptionsvorgang behindern (beispielsweise Kohlendioxid, Stickstoff etc.). Die Gase werden auch als Inertgase oder Fremdgase bezeichnet. Diese Stoffe können im Sorptionsmittel vorsorbiert sein, durch chemische Reaktionen freigesetzt werden, aus den vorhandenen Gehäusematerialien entgasen oder über Undichtigkeiten des Systems eintreten. Zusammengefasst besteht bei derartigen Unterdruck-Sorptionsvorrichtungen also prinzipiell das Problem, dass entweder Ausgasungen oder Undichtigkeiten zu einem Druckanstieg und damit zu einer Funktionsbeeinträchtigung der Vorrichtung führen können.

Im Stand der Technik sind unterschiedliche Mittel beschrieben, um die Inertgase aus dem System der Sorptionsmaschine zu entfernen. So offenbart z. B. die DE 44 44 252 B4 ein Verfahren, bei dem ein Bindemittel in die Sortpionsmaschine eingebracht wird. Um für den Sorptionsvorgang das System von störendem Inertgas oder -dampf frei zu halten, so dass in der Dampfphase nur Arbeitsmitteldampf vorhanden ist, wird dem Sorptionssystem ein Bindemittel hinzugefügt. Das Bindemittel hat dabei die Aufgabe, die im Sorptionssystem vorhandenen oder freiwerdenden Inertgase oder -dämpfe zu binden und damit dem Arbeitsmitteldampfraum zu entziehen. Es muss dabei in der Lage sein, soviel Inertgas oderdampf zu binden, wie im Sorptionssystem durch Entgasung oder chemischer Reaktion der darin enthaltenen Stoffe und Materialien frei wird. In einem hermetisch geschlossenen Sorptionssystem kann deshalb nur eine begrenzte Menge an Inertgas oder -dampf anfallen und dies meist zu Beginn der Sorptionszyklen. Das Bindemittel braucht innerhalb dieses Zeitraums nur diese bestimmte Menge an Inertgas zu binden. Als Bindemittel eignen sich prinzipiell alle Stoffe, die in der Lage sind, die in einem Sorptionssystem anfallenden Inertgase oder -dämpfe zu binden. Das Bindemittel sollte dabei aber in der Lage sein, das gebundene Inertgas auch bei systembedingten Temperaturschwankungen nicht wieder freizusetzen. Da die meisten Bindemittel hierzu bei hohen Temperaturen neigen, sollte das Bindemittel an einer Stelle angebracht sein, wo möglichst niedrige Temperaturen und nur leichte Temperaturschwankungen vorherrschen. In einem Sorptionssystem treten im Sorptionsmittelbehälter bei der Sorption sowie der Desorption die höchsten Temperaturen auf. Gemäß der DE 44 44 252 B4 wird das Bindemittel in einem Bereich angebracht, wo die vergleichsweise tieferen Systemtemperaturen vorliegen, z.B. im Kondensator, Verdampfer oder Sammelbehälter.

Weiterhin beschreibt die DE 103 10 748 B3 ein Verfahren zur Entfernung von Inertgasen aus einer Sorptionsmaschine. Hierbei ist eine Zwischenphase vorgesehen, in der nach Ermittlung von Fremdgasen im System (zum Beispiel aufgrund eines Anstieges des Innendrucks oder aufgrund unzureichender Kondensatorleistung) ein Prozess gestartet wird, der diese störenden Gase aus dem Vakuumsystem entfernt. Zunächst wird die Wärmeabfuhr aus dem Kondensator möglichst vollständig unterbunden. Dann wird beispielsweise dem Sorber über einen Brenner Wärme zugeführt. Das dampfförmig aus dem Sorptionsmittel ausgetriebene Arbeitsmittel (vorzugsweise Wasser) kondensiert zuerst an der kältesten Stelle im Vakuumraum und heizt den kompletten, im normalen Betrieb unter Unterdruck stehenden Vakuumraum kontinuierlich auf. Dabei steigt der Druck im System. Überschreitet der Systemdruck den Umgebungsdruck (in der Regel Umgebungsdruck bei 1013 mbar, aber auch andere Konstellationen sind möglich), öffnet eine Ablaßeinrichtung (beispiels- und vorzugsweise ein Ventil) und lässt den dampfförmigen Inhalt in die umgebende Atmosphäre abströmen. Gewissermaßen "schiebt" dabei der vom Sorber kommenden Dampf nach und nach die Fremdgase aus. Dabei geht regelmäßig auch ein Teil des Arbeitsmittels verloren. Sind alle Fremdgase aus dem System entfernt, wird die Ablaßeinrichtung geschlossen.

Die EP 2 357 433 offenbart eine Vorrichtung, die an eine Sorptionsmaschine angeschlossen ist. Hierbei ist im Bereich des Verflüssigers ein Hohlraum zur Pufferung für Inertgas angeschlossen. Der Hohlraum weist im unteren Bereich ein Eingangsventil auf, wobei das Eingangsventil hohlraumseitig immer mit flüssigem Arbeitsmittel bedeckt ist.

Nachteilig bei den Vorrichtungen und Verfahren des Standes der Technik ist, dass diese einen hohen apparativen Aufwand benötigen. Es ist mit hohen Kosten verbunden, die Fremdgase mit einer Vakuumpumpe über lange Zeit zu entfernen, da jedes System mit einer Vakuumpumpe ausgerüstet sein müsste. Die die Evakuierung des Inertgases müsste bei jeder Wartung durchgeführt werden, um einen kontinuierlichen Betrieb des Systems zu garantieren. Hierdurch würden jedoch kurze Wartungsintervalle entstehen, die wiederum mit hohen Kosten verbunden sind. Die Entfernung von bestimmten Inertgasen durch chemische oder physikalische Bindung setzt die Einführung eines fremden Stoffes in das System voraus. Solche Stoffe sind sehr selektiv und wirken nicht für alle Inertgase. Außerdem kann nicht völlig ausgeschlossen werden, dass die eingebrachten Stoffe keine Wirkung auf das Sorptionssystem haben. Weiterhin ist es sehr aufwendig und energetisch ungünstig das ganze Sorptionssystem durch Aufheizung zu einem umgebungsbezüglichen Überdruck zu bringen, um das Inertgas zu entfernen. Nachteilig bei der in der EP 2 357 433 A1 offenbarten Inertgasfalle ist, dass diese im Wesentlichen nur bei höheren Kondensatorstemperaturen (circa 60 bis 80°C) ausreichend Fremdgas aus der Sorptionsmaschine entfernt. Der "warme" Dampf (hoher Druck) strömt vom Kondensator in die Falle und kondensiert an der "kalten" inneren Oberfläche der Falle (niedriger Druck). Das ist aber nur möglich wenn die Temperatur der Falle niedriger als die Temperatur des Kondensators ist. Bei niedrigeren Kondensatortemperaturen (z. B. 20 bis 50°C), kann der Dampf im Kondensator schon kälter als der Dampf in der Falle sein, so dass eine Dampfströmung vom Kondensator in die Falle unmöglich ist und die Falle dementsprechend nicht funktionsfähig ist. Die offenbarte Falle kann aufgrund ihrer Mängel nur in einem sehr begrenzten Temperaturbereich eingesetzt werden.

Aufgabe der Erfindung war es demgemäß Mittel bereitzustellen, die nicht die Nachteile und Mängel des Standes der Technik aufweist und einen kontinuierlichen Betrieb einer Adsorptionskältemaschine ermöglichen.

Gelöst wird die Aufgabe durch die unabhängigen Ansprüche. Vorteilhafte Ausführungsformen ergeben sich aus den Unteransprüchen.

Es war völlig überraschend, dass ein Vakuumbehälter für eine Adsorptionskältemaschine bereitgestellt werden kann, der nicht die Nachteile und Mängel des Standes der Technik aufweist. Der Vakuumbehälter ist eine einfache und preisgünstige Vorrichtung, mit der auch ältere Adsorptionskältemaschinen nachgerüstet werden können. Außerdem ist für die Evakuierung der Fremdgase keine Vakuumpumpe, Bindestoffe oder nennenswerter Energieaufwand notwendig. Die Evakuierung der Fremdgase kann im laufenden, kontinuierlichen Betrieb der Adsorptionskältemaschine vorgenommen werden. Es kann jedoch auch vorteilhaft sein, die Fremdgase in dem Behälter zu sammeln, bis ein bestimmter Gesamtdruck im Behälter vorliegt und erst dann die Gase aus dem Behälter zu entfernen. Durch die erreichende Selbstevakuierung der Maschine kann Wartungsbedarf stark reduziert werden.

Der Vakuumbehälter verfügt über dampfoffene Verbindungsmittel, die mit einer Kondensator-Einheit der Adsorptionskältemaschine verbunden sind. Außerdem weist der Behälter eine Ablasseinrichtung und mindestens ein Kühlelement auf, wobei in dem Verbindungsmittel mindestens ein Bauteil zur Absperrung oder Regelung des Durchflusses von Fluiden vorliegt.

Der Vakuumbehälter kann auch als Inertgasfalle bezeichnet werden. Er stellt insbesondere einen externen Behälter da, der mit der Adsorptionskältemaschine verbunden ist und in dem sich das Inertgas sammelt. Der Behälter kann insbesondere für die gesamte Menge an entstehendem Fremdgas ausgelegt sein, wobei es auch bevorzugt ist, den Behälter in regelmäßigen oder unregelmäßigen Zeitabständen zu entleeren. Das in dem Behälter befindliche Fremdgas oder Inertgas kann durch unterschiedliche Verfahren aus dem Behälter entfernt werden. Es kann beispielsweise bevorzugt sein, eine Vakuumpumpe an die Ablasseinrichtung anzuschließen. Die Ablasseinrichtung kann als Ventil, insbesondere Überdruckventil oder Evakuierungsventil oder als druckregulierte Klappe (z. B. Rückschlagklappe) ausgestaltet sein. Es kann jedoch auch bevorzugt sein, dass an dem Behälter ein Heizelement vorliegt. Kältemittel, welches mit dem zu entfernenden Fremdgas in den Behälter strömt, kann mittels eines Heizelementes (z.B. mittels einer elektrischen Heizung) auf Temperaturen von über 100 °C erhitzt werden. Wenn die Ablasseinrichtung als Überdruckventil ausgeführt ist, erfolgt die Ausblasung des Fremdgases ohne weitere Eingriffe.

Das Bauteil, welches in der Verbindung (dem Verbindungsmittel) zwischen Kondensator-Einheit und Behälter angeordnet ist, ist vorzugsweise ausgewählt aus der Gruppe umfassend Durchgangsventil, Eckventil, Schrägsitzventil, Magnetventil, Rückschlagklappe oder Schwimmkörper. Das Bauteil ist bevorzugt in ein Rohr integriert und bewirkt eine lokale Verengung des Strömungsquerschnittes. Vorteilhafterweise können unterschiedliche Ventile, die nach ihrer geometrischen Form eingeteilt werden können, in ein Verbindungsmittel integriert sein. Durch die Verwendung der Ventile lässt sich durch Änderung der Nennweite die Durchflussmengen in den Verbindungsmitteln exakt und präzise dosieren, sowie sicher gegen die Umgebung abschließen. Die Ventile können vorteilhafterweise per Hand, per Medium, maschinell oder elektromagnetisch betätigt werden.

Es ist bevorzugt, dass das Ventil in dem Verbindungsmittel zwischen Kondensator-Einheit und Behälter mit einer Steuerung versehen ist, die das Ventil öffnet, sobald in der Kondensator-Einheit ein höherer Druck als im Behälter Hohlraum entsteht. Falls das Bauteil als Schwimmkörper ausgeführt ist, muss das Gewicht des Schwimmkörpers groß genug sein, um eine Öffnung, auf oder an der er aufliegt, sicher verschließt. Während der Desorptionsphase wird der Schwimmkörper von dem in den Behälter einströmendem Arbeitsmitteldampf angehoben. Der Schwimmkörper kann beispielsweise aus Kunststoff, z. B. Polypropylen gefertigt sein.

Es ist bevorzugt, dass ein Verbindungsmittel mindestens ein Rohr oder eine Durchlassöffnung ist. Das Rohr ist vorzugsweise formschlüssig oder stoffschlüssig mit der Kondensator-Einheit und dem Behälter verbunden. Formschlüssige Verbindungen entstehen vorzugsweise durch das Ineinandergreifen von mindestens zwei Verbindungspartnern. Die formschlüssigen Verbindungen umfassen Schrauben, Nieten, Stifte oder Klemmen. Das Rohr kann beispielsweise mittels Schrauben oder Nieten und entsprechenden Dichtungen mit Komponenten der Adsorptionskältemaschine und dem Behälter verbunden sein.

Weiterhin kann das Rohr durch stoffschlüssige Mittel an der Kondensator-Einheit und dem Behälter angebracht sein. Stoffschlüssige Verbindungen werden durch atomare oder molekulare Kräfte zusammengehalten. Sie sind gleichzeitig nicht lösbare Verbindungen, die sich nur durch Zerstörung wieder lösen lassen. Stoffschlüssige Verbindungen umfassen Löten, Schweißen oder Kleben.

Es kann auch bevorzugt sein, dass zwischen Kondensator-Einheit und Behälter lediglich eine Öffnung vorliegt. In die Öffnung ist bevorzugt ein Bauteil zur Absperrung oder Regelung des Durchflusses von Fluiden integriert.

Mittels der dampfoffenen Verbindung zwischen Kondensator-Einheit und Behälter kann vorteilhafterweise ein Fluid, umfassend ein dampfförmiges und/oder flüssiges Fluid aus dem Kondensator durch ein Rohr in den Behälter strömen. Ein Fluid bezeichnet im Sinne der Erfindung insbesondere ein Gas oder eine Flüssigkeit. Das Kältemittel, das im Sinne der Erfindung als Fluid bezeichnet werden kann, liegt in dem Kondensator als Dampf und Flüssigkeit vor. Es ist bevorzugt, dass dampfförmiges Kältemittel und Fremdgas aus der Kondensator-Einheit durch ein Verbindungsmittel in den Behälter strömen, wobei die Strömung der Gase insbesondere durch ein Ventil, eine Rückschlagklappe oder einem Schwimmkörper reguliert wird. Das Bauteil kann hierbei vorteilhafterweise manuell, automatisch oder selbstregulierend sein. Es kann jedoch auch bevorzugt sein, dass das Bauteil manuell oder automatisch reguliert wird. Beispielsweise kann es vorteilhaft sein, wenn sich das Bauteil immer zu bestimmten Betriebspunkten oder der Adsorptionskältemaschine öffnet.

Der Fachmann weiß, dass Betriebspunkte bestimmte Punkte im Kennfeld oder auf der Kennlinie eines technischen Gerätes, bevorzugt einer Sorptionsmaschine, besonders bevorzugt einer Adsorptionskältemaschine oder Adsorptionswärmemaschine bezeichnen können, die aufgrund der Systemeigenschaften und einwirkenden äußeren Einflüsse und Parameter eingenommen werden. Beispiele hierfür sind die Temperaturen der Wärmesenken und Quellen oder Gesamtvolumenströme im Rückkühlkreis im Verdampfer oder Desorberstrang.

Es war völlig überraschend, dass der Vakuumbehälter universell einsetzbar ist und an unterschiedliche Anlagenkonfigurationen anpassbar ist. Vorteilhafterweise kann der Behälter für 1-Kammer-Systeme, beispielsweise mit 2 Adsorbern, aber auch für 2- oder Mehrkammer-Systeme mit jeweils nur einem Adsorber einer Adsorptionskältemaschine verwendet werden. Außerdem kann er einfach und schnell auf andere Typen von Sorptionsmaschinen angepasst werden. Die Maschinen müssen hierfür im Wesentlichen nicht apparativ verändert werden. Die Anlagenkonfiguration bezeichnet im Sinne der Erfindung bevorzugt die Konfiguration der Maschine, das heißt beispielsweise die interne hydraulische Verschaltung der Komponenten der Maschine, die interne kältemittelseitige Verschaltung der Komponenten oder den geänderten Grundaufbau des Maschine (z. B. Anzahl der Adsorber, Betrieb des Verdampfers, des Kondensators, usw.).

Ein Rohr beschreibt im Sinne der Erfindung insbesondere einen länglichen Hohlkörper, dessen Länge in der Regel wesentlich größer als sein Querschnitt ist. Es kann auch einen rechteckigen, ovalen oder anderen Querschnitt aufweisen. Das Rohr weist bevorzugt eine Länge von 0 bis 2 m auf, wobei insbesondere eine Länge von 0 m bis 1 m vorteilhaft ist. Das Rohr kann einfach mit der Kondensator-Einheit und dem Behälter verbunden. Im Sinne der Erfindung kann es auch vorteilhaft sein, das Rohr derart kurz zu gestalten, dass es lediglich als Öffnung zwischen der Kondensator-Einheit und dem Behälter vorliegt. Dies kann insbesondere bei sehr kompakten Anlagen notwendig sein. Nichts dergleichen ist im Stand der Technik beschrieben. Demgemäß umfasst ein Verbindungsmittel im Sinne der Erfindung insbesondere mindestens ein Rohr, eine Öffnung oder einen Durchgang, durch welche ein Massenstrom an flüssigen, dampfförmigen Kältemittel und/oder Fremdgas strömen kann.

Das Rohr besteht bevorzugt aus Metall, Kunststoff und/oder keramischen Werkstoffen. Vorzugsvarianten umfassen Stahl, rostfreier Stahl, Gusseisen, Kupfer, Messing, Nickel-Legierungen, Titan-Legierungen, Aluminium-Legierungen, Kunststoff, Kombinationen aus Kunststoff und Metall (Verbundrohr), Kombinationen aus Glas und Metall (Email) oder Keramik. Es kann auch bevorzugt sein, mehrere Rohre kraftschlüssig und/oder stoffschlüssig miteinander zu verbinden. Kraftschlüssige Verbindungen umfassen Spannringe, Formteile, verbogene Rohrstücke, Schrauben oder Nieten. Stoffschlüssige Verbindungen umfassen Kleben, Schweißen, Löten oder Vulkanisieren. Aufgrund der guten Wärmeleitfähigkeit wird vorteilhafterweise Kupfer oder Aluminium als Material für die Rohre eingesetzt, wobei auch die Verwendung von Edelstahl vorteilhaft sein kann, da dieser hohe statische und dynamische Festigkeitswerte und eine hohe Korrosionsbeständigkeit aufweist. Rohre aus Kunststoff, beispielsweise Polyvinylchlorid, sind besonders leicht und flexibel und können somit das Gewicht der Adsorptionskältemaschine reduzieren. Keramische Werkstoffe, umfassend baukeramische Werkstoffe, weisen eine hohe Stabilität und lange Haltbarkeit auf. Besonders vorteilhaft sind Kombinationen der aufgeführten Materialien, da somit unterschiedliche Stoffeigenschaften kombiniert werden können. Die bevorzugten Materialien genügen den hohen fertigungstechnischen Ansprüchen eines Rohres, bzw. einer Adsorptionskältemaschine, da sie stabil gegenüber hohen Temperaturen oder variierenden Drücken sind.

Auch der Vakuumbehälter ist vorzugsweise aus Metall gefertigt. Es hat sich herausgestellt, dass hierdurch ein kostengünstiges Mittel zur Entfernung von Fremdgas aus einer Adsorptionskältemaschine bereitgestellt werden kann, dass auch den hohen und wechselnden Drücken standhalten kann.

Es war völlig überraschend, dass der Vakuumbehälter zur Entfernung eines Fremdgases aus einer Adsorptionskältemaschine verwendet werden kann, wobei der Vakuumbehälter mit einer Verdampfer- / Kondensator-Einheit der Adsorptionskältemaschine verbunden ist und der Behälter dampfoffene, ein Ventil aufweisende Verbindungsmittel, eine Ablasseinrichtung und mindestens ein Kühlelement aufweist. Insbesondere durch die Kühlung des Vakuumbehälters kann eine Inertgasfalle bereitgestellt werden, die effizient das Fremdgas aus der Kondensator-Einheit "saugt". Es hat sich herausgestellt, dass nur durch eine Kühlung des Vakuumbehälters eine Evakuierung des Fremdgases aus dem Kondensator ermöglicht wird. Durch die Kühlung des Behälters wird ein universell einsetzbares Mittel bereitgestellt, dessen Funktionalität nicht durch eine hohe Umgebungstemperatur limitiert wird. Ferner hat sich gezeigt, dass bei einer Nicht-Kühlung des Behälters nicht sichergestellt ist, dass Inertgas aus dem Kondensator in den Behälter strömt, da der Behälter beispielsweise durch eine vorherige Aufheizung oder durch eine erhöhte Temperatur unter einem Designgehäuse einer Adsorptionskältemaschine selbst eine Temperatur angenommen hat, die über der Kondensatortemperatur liegt. Somit wäre der Druck in dem Behälter ggf. höher als der in der Kondensator-Einheit und es würde kein Inertgas aus dem Kondensator in den Behälter strömen.

Der Vakuumbehälter weist ein Kühlelement auf, dass die Temperatur des Behälters vorzugsweise auf einer Temperatur hält, die niedriger oder gleich oder ähnlich als die der Kondensator-Einheit ist. Der Fachmann weiß, dass in einer Adsorptionskältemaschine die Temperatur der Einheiten der Adsorptionskältemaschine mit dem in den Einheiten vorliegenden Druck korreliert. Wenn die Konzentration von Inertgas in dem Behälter oder der Adsorptionskältemaschine ansteigt, kann ggf. keine Korrelation zwischen Temperatur und Druck feststellbar sein. Es ist dem Fachmann ferner bekannt, dass einer Temperaturerniedrigung eine Druckerniedrigung folgt. Es ist bevorzugt, dass in dem Vakuumbehälter ein Druck herrscht, der insbesondere niedriger als der im Kondensator ist, wobei die Temperatur aufgrund von Inertgas in dem Behälter gleich oder ähnlich zu der im Kondensator ist. Für den Fachmann stellt es ein Leichtes dar, eine "ähnliche" Temperatur zu bestimmen. Eine "ähnliche" Temperatur liegt im Sinne der Erfindung insbesondere dann vor, wenn die Temperaturdifferenz zwischen Kondensator und Behälter weniger als 40°, bevorzugt weniger als 20° und besonders bevorzugt weniger als 5° Celsius beträgt.

Es ist bevorzugt, dass in dem Behälter ein niedriger Druck als im Kondensator herrscht. Hierdurch kann sichergestellt werden, dass Inertgas aus dem Kondensator in den Behälter strömt. Die Druckerniedrigung wird bevorzugt durch eine Kühlung des Vakuumbehälters erreicht, wobei es auch bevorzugt sein kann, den Druck, insbesondere die Temperatur im Kondensator zu erhöhen. Dies kann vorteilhafterweise dadurch erfolgen, dass weniger Wärme aus dem Kondensator abgeführt wird. Weiterhin kann es bevorzugt, sein, dass die Verbindungsmittel zwischen Behälter und Kondensator dann geöffnet werden, wenn der Druck im Kondensator hoch, insbesondere höher als der in dem Vakuumbehälter ist. Der Fachmann weiß, dass eine Adsorptionskältemaschine unterschiedliche Betriebsweisen aufweist und unterschiedliche Drücke zu unterschiedlichen Zeitpunkten in der Maschine vorliegen. Es ist demgemäß vorteilhaft, wenn das Inertgases dann aus der Kondensator-Einheit entfernt wird, wenn die Druckdifferenz zwischen Behälter und dem Kondensator hoch bzw. am höchsten ist. Die höchste Druckdifferenz kann im Sinne der Erfindung auch als Druckspitze bezeichnet werden. Druckspitzen bezeichnen dem Fachmann bekannte hohe Drücke in einer Adsorptionskältemaschine, die periodisch wiederkehren, bevorzugt in einer Einheit der Adsorptionskältemaschine vorliegen und mit den einzelnen Phasen der Adsorptionskältemaschine (z. B. Adsorption, Desorption, Kondensation oder Verdampfung) korrelieren.

Dem Fachmann sind Mittel zur Kühlung bekannt. Die Kühlelemente oder Mittel zur Kühlung umfassen bevorzugt:
- Kühlung mit dem Kondensat (d. h. dem flüssigen Kältemittel) aus dem Kondensator, insbesondere mit einem weiteren Verbindungsmittel zwischen Kondensator und Behälter, durch welches flüssiges Kältemittel aus dem Kondensator in den Behälter strömt, bevorzugt
   ▪ Extern (mit einem wärmeübertragenden Element z. B. einer Rohrschlange), so dass das Kältemittel aus dem Kondensator in das wärmeübertragende Element (insbesondere Wärmeübertrager) geleitet wird, und/oder
   ▪ Intern (Zufuhr von flüssigen Kältemittel über Verbindungsmittel aus dem Kondensator in den Behälter)
- Kühlung mittels einem Gebläse
- Verbindung mittels Verbindungsmittel zwischen Behälter und Verdampfer (der Verdampfer ist mit Abstand der kälteste Bereich in einer Adsorptionskältemaschine)
- Peltier Element, welches insbesondere an oder um den Behälter angeordnet ist
- Wärmeübertragende Verbindung des Behälters mit dem Rückkühlkreis (der externe Wasserkreis zur Rückkühlung des Adsorbers und des Kondensators)
- Wärmeübertragende Verbindung zum Kältekreis (Verdampferkreis) der Adsorptionskältemaschine
- Ein "aktives" Kälteerzeugungsgerät, insbesondere Flüssigkeitskühler, Klimageräte oder sonstige dem Fachmann bekannte Kühlgeräte, die Energie benötigen

Die wärmeübertragende Verbindung zwischen dem Rückkühlkreis oder dem Kältekreis der Adsorptionskältemaschine kann vorzugsweise durch einen Wärmeübertrager erfolgen, so dass vorteilhafterweise kalter Wärmeträger aus dem Rückkühlkreis oder dem Kältekreis mit dem Behälter in wärmeübertragenden Kontakt oder Verbindung steht, indem der Wärmeträger (oder Wärmeträgerfluid) durch z. B. einen Wärmeübertrager geleitet wird, der an oder um den Behälter angeordnet ist. Es kann auch bevorzugt sein, dass der Behälter eine Verbindung zu einem Bereich der Kondensator-Einheit aufweist, in der flüssiges Kältemittel vorliegt. Das heißt, es ist bevorzugt, dass mindestens ein weiteres Verbindungsmittel zwischen Kondensator-Einheit und Behälter besteht, durch welches flüssiges Kondensat strömt. Durch die Verbindung, z. B. einem Rohr kann flüssiges Kältemittel in den Behälter strömen und diesen kühlen. Ferner ist es bevorzugt, dass das flüssige Kältemittel aus der Kondensator-Einheit in einen externen Wärmeaustauscher (z. B. einem Spiralrohr) geführt wird und so den Behälter kühlt. In einer weiteren Ausführungsform weist der Behälter eine Verbindung zu einer Verdampfer-Einheit der Adsorptionskältemaschine auf. Dem Fachmann ist bekannt, dass in der Verdampfer-Einheit die niedrigsten Temperaturen in einer Adsorptionskältemaschine vorliegen. Durch die Verbindung, die beispielsweise als wärmeleitendes Element ausgeführt sein kann, ist eines effektive des Vakuumbehälters möglich.

In einer bevorzugten Ausführungsform der Adsorptionskältemaschine bestehen mindestens zwei Verbindungsmittel zwischen Behälter und Kondensator-Einheit. Hierdurch wird nicht nur gasförmiges Fremdgas und Kältemittel aus der Kondensator-Einheit in den Behälter befördert, sondern es ist auch bevorzugt, dass flüssiges Kältemittel aus der Kondensator-Einheit in den Behälter strömt. Es liegt somit in einer bevorzugten Ausführungsform flüssiges Kältemittel in dem Behälter vor, welches durch ein Heizelement erhitzt werden kann, so dass Fremdgas aus dem Behälter getrieben wird. Weiterhin ist bevorzugt, dass eine offene Verbindung zwischen Kondensator-Einheit und Behälter vorliegt und eine Dampfkondensation in der Falle erfolgt, wenn der Behälter gekühlt wird
Es war überraschend, dass der Vakuumbehälter unterschiedlich reguliert werden kann. So ist es beispielsweise bevorzugt, dass Fremdgas aus dem Behälter mit einem regulierten Magnetventil oder einem selbstregulierenden Überdruckventil erfolgt. Dahingegen ist das Einbringen des Fremdgases in den Behälter zu jedem beliebigen Zeitpunkt möglich oder erfolgt dann, wenn der Druck in der Kondensator-Einheit am höchsten ist. Dem Fachmann ist bekannt, dass eine Adsorptionskältemaschine unterschiedliche Betriebsweisen aufweist und unterschiedliche Drücke in den Einheiten vorliegen.

In einem weiteren Aspekt betrifft die Erfindung ein Verfahren zur Entfernung eines Fremdgases aus einer Adsorptionskältemaschine, umfassend mindestens eine Adsorber- / Desorber-Einheit, eine Verdampfer- / Kondensator-Einheit und einen, mindestens ein Kühlelement aufweisenden Vakuumbehälter, umfassend die folgenden Schritte:
a. Kühlung des Behälters durch das Kühlelement auf eine Temperatur, die niedriger, gleich oder ähnlich als die der Kondensator-Einheit ist,
b. Einbringung eines dampfförmigen Kältemittels aus der Desorber-Einheit in die Kondensator-Einheit, wobei das Kältemittel in der Kondensator-Einheit zumindest teilweise kondensiert und sich das Inertgas zunächst im Kondensator sammelt,
c. Öffnung eines, zwischen der Kondensator-Einheit und dem Vakuumbehälter angeordneten Bauteils zur Absperrung oder Regelung des Durchflusses von Fluiden, wobei ein Fremdgas und dampfförmiges Kältemittel aus der Kondensator-Einheit in den Vakuumbehälter strömt.

Es war überraschend, dass bei ähnlichen Temperaturen der Kondensator-Einheit und dem Vakuumbehälter, der Behälter während den zyklischen Druckspitzen im Betrieb der Adsorptionskältemaschine das Inertgas aus der Kondensator-Einheit entfernen kann, obwohl beide im "ruhenden" Zustand den gleichen Druck aufweisen.

Es kann vorteilhaft sein, wenn sich das Bauteil durch den Dampfdruck in der Kondensator-Einheit, manuell oder automatisch öffnet. Hierdurch kann reguliert werden, in welchen Phasen das Fremdgas aus der Adsorptionskältemaschine entfernt wird. Der Behälter wird durch ein Heizmittel (z. B. eine elektrische Heizung oder ein Peltier-Element) erhitzt, so dass durch den Gesamtdruck innerhalb des Behälters eine Ablasseinrichtung manuell oder automatisch geöffnet wird und das Inertgas aus dem Behälter strömt.

Es ist bevorzugt, dass die Öffnung des Bauteils im normalen Betrieb der Adsorptionskältemaschine bei Druckspitzen in der Kondensator-Einheit erfolgt. Der Fachmann weiß, dass bei einem Betrieb der Adsorptionskältemaschine, insbesondere bei unterschiedlichen Phasen, unterschiedliche Drücke in den Einheiten der Maschine herrschen können. Dementsprechend kann es vorteilhaft sein, wenn zu einer Druckspitze, an dem der Druck in der Kondensator-Einheit hoch ist, das Bauteil zwischen Behälter und Kondensator geöffnet wird oder sich automatisch oder selbstregulierend öffnet und Inertgas aus dem Kondensator in den Behälter strömt.

Weiterhin kann es vorteilhaft sein, wenn der Kondensator kurzzeitig erwärmt wird (bspw. durch reduzierte Wärmeabfuhr) und sich so sogar größere Druckspitzen realisieren lassen, die zu einem verbesserten Einspritzen von Inertgas aus dem Kondensator in den Behälter führen. Durch die Erhöhung der Temperatur in der Kondensator-Einheit steigt insbesondere auch der Druck in dieser, so dass bei einer Öffnung des Bauteils Inertgas aus dem Kondensator in den Behälter strömt.

Erfindungsgemäss wird das in dem Vakuumbehälter gesammelte Inertgas durch eine Evakuierung des Behälters entfernt. Hierfür kann beispielsweise eine Vakuumpumpe an die Ablasseinrichtung des Behälters angeschlossen werden.

Nachfolgend soll die Erfindung anhand von Figuren beispielhaft erläutert werden, ohne jedoch hierauf beschränkt zu sein. Es zeigen:
- Fig. 1A-C: Bevorzugte Ausführungsformen des Vakuumbehälters
- Fig. 2.: Ausführung eines Vakuumsbehälters mit einer Kondensator-Einheit
- Fig. 3: Bevorzugt Adsorptionskältemaschine mit Vakuumbehälter
- Fig. 4: Bevorzugte Adsorptionskältemaschine mit einer Verbindung zwischen Verdampfer-Einheit und Vakuumbehälter
- Fig. 5: Bevorzugte Adsorptionskältemaschine mit einer Rohrschlange um den Vakuumbehälter
- Fig. 6: Bevorzugte Adsorptionskältemaschine mit einem Gehäuse

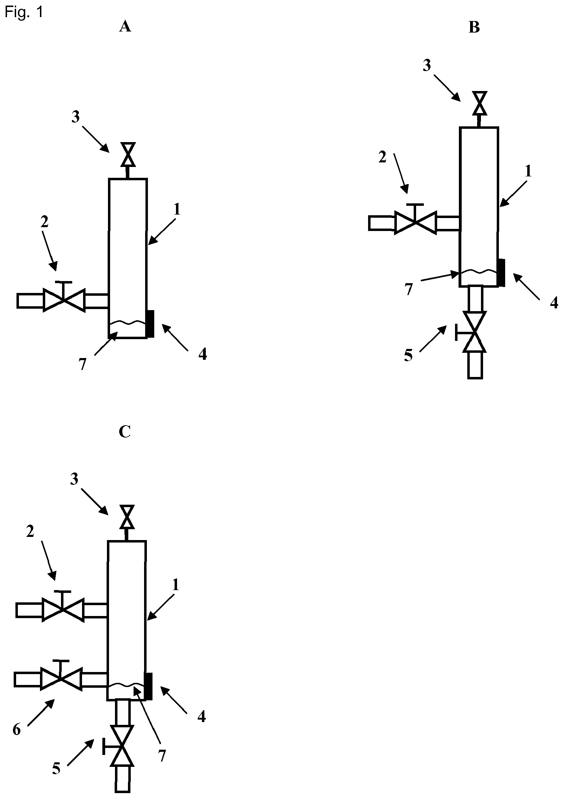

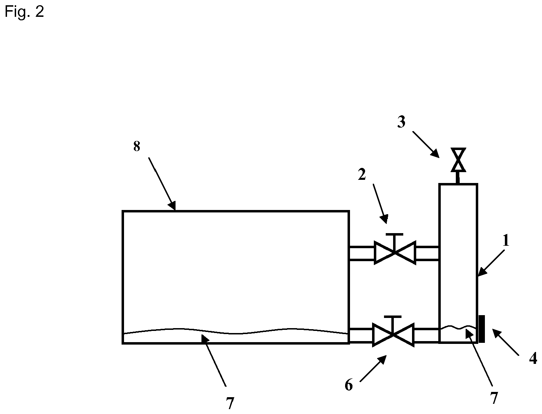

Die Fig. 1A-C und Fig. 2. zeigen bevorzugte Ausführungsformen des Vakuumbehälters und eine mit einer Kondensator-Einheit. Die Kondensator-Einheit 8 und der Vakuumbehälter 1 sind unter Vakuum. In der Kondensator-Einheit 8 befindet sich zusätzlich zu dem dampfförmigen Kältemittel auch Inertgas. Der Vakuumbehälter 1 enthält in einer Ausführungsform nur flüssiges Kältemittel 7 und Wasserdampf (minimale Menge oder gar kein Inertgas). Das Verbindungsmittel mit einem Ventil 2 öffnet und das Inertgas mit dampfförmigen Kältemittel strömt in den Vakuumbehälter 1. Hierfür ist eine Druckdifferenz zwischen Vakuumbehälter und Kondensator-Einheit 8 vorteilhaft. Die Druckdifferenz wird bevorzugt durch eine Kühlung des Vakuumbehälters mit einem Kühlelement 4 erreicht.

Wenn das Fremdgas aus dem Vakuumbehälter 1 entfernt werden soll, geht vorzugsweise das Verbindungsmittel mit einem Ventil 2 zu und der Vakuumbehälter 1 wird insbesondere mit einem Heizelement aufgeheizt. Wenn der Druck in dem Vakuumbehälter 1 über dem Umgebungsdruck liegt, öffnet die Ablasseinrichtung 3 und Wasserdampf und Inertgas strömen in die Umgebung. Eine weitere Möglichkeit der Kühlung des Vakuumbehälters besteht darin, dass die Verbindungsmittel mit einem Ventil 2 und 6 geöffnet werden. Flüssiges Kältemittel strömt über die Verbindungsmittel mit einem Ventil 6 in den Vakuumbehälter 1, verdampfen und strömen über die Verbindungsmittel mit einem Ventil 2 zurück in die Kondensator-Einheit 8. Hierdurch wird der Vakuumbehälter 1 gekühlt. Es ist ferner bevorzugt, dass eine weitere Kühlung des Behälters 1 durch Einbringung von kalten Kältemittel aus der Kondensator-Einheit erfolgen kann. Hierfür kann beispielsweise eine Verbindung zwischen Kondensator-Einheit und Vakuumbehälter 1 bestehen.

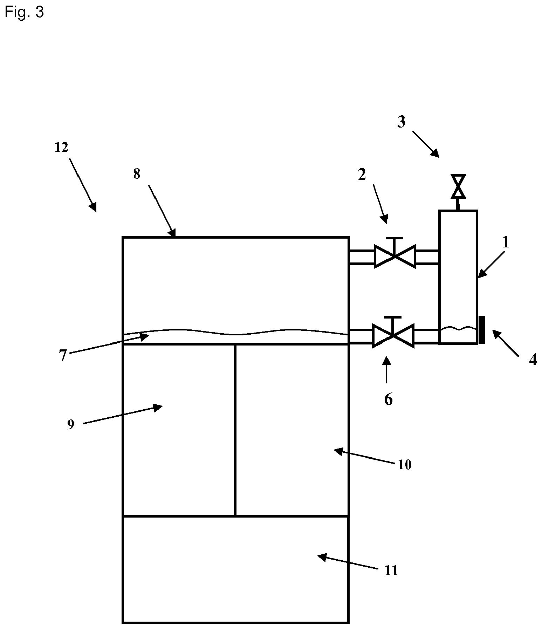

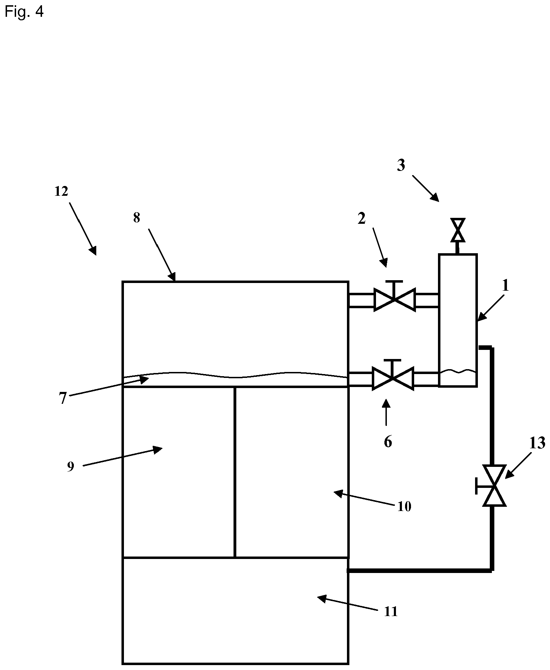

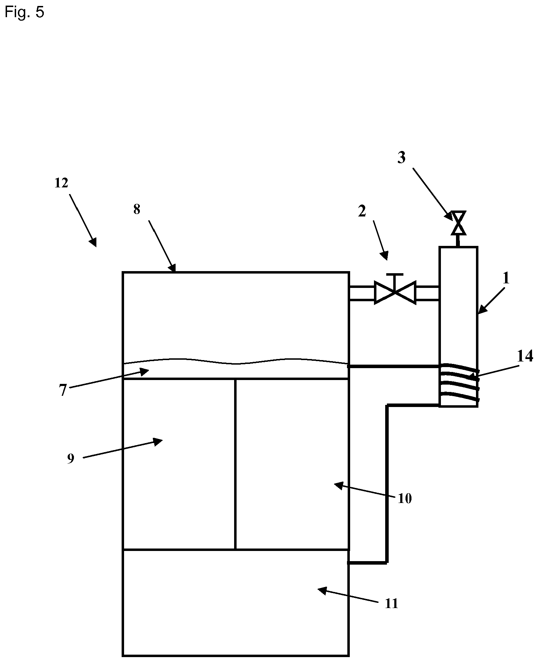

Fig. 3 zeigt eine bevorzugt Adsorptionskältemaschine mit Vakuumbehälter und Fig. 4 eine mit einer Verbindung zur Verdampfer-Einheit der Adsorptionskältemaschine. Fig. 5 zeigt eine Anordnung einer Rohrschlange um den Behälter. Die Adsorptionskältemaschine 12 weist vorzugsweise eine Kondensator-Einheit 8, eine Adsorber-Einheit 9, eine Desorber-Einheit 10 und eine Verdampfer-Einheit 11 auf. Der Vakuumbehälter 1 entzieht der Kondensator-Einheit 8 der Adsorptionskältemaschine 12 Fremdgas. Das Fremdgas kann durch ein Heizelement aus dem Vakuumbehälter 1 entfernt werden, indem in dem Behälter 1 ein Überdruck erreicht wird und das Inertgas durch eine Ablasseinrichtung 3 freigesetzt wird. Der Vakuumbehälter 1 ist vorzugsweise durch Verbindungsmittel 2 mit gesteuerten Ventil oder Ruckschlagventil mit der Kondensator-Einheit 8 verbunden. Während des Betriebs der Adsorptionskältemaschine 12 sammelt sich das Inertgas hauptsächlich in der Kondensator-Einheit 8.

Wenn sich das Ventil in dem Verbindungsmittel 2 zwischen Vakuumbehälter 1 und Kondensator-Einheit 8 öffnet, verteilt sich das Inertgas im ganzen Volumen des Behälters 1 und der Kondensator-Einheit 8, so dass die Inertgaskonzentration in der Kondensator-Einheit 8 abnimmt, wobei es zeitgleich in dem Behälter 1 zunimmt. Da die Temperatur in der Kondensator-Einheit 8 bevorzugt höher ist als die Temperatur des Vakuumbehälters 1, gibt es zusätzlich einen Druckunterschied zwischen Kondensator-Einheit 8 und Vakuumbehälter 1. Daher ergibt sich eine Dampfströmung von der Kondensator-Einheit 8 in den Vakuumbehälter 1. Durch diese Strömung wird mehr Inertgas in den Vakuumbehälter 1 gedrückt, so dass sich die Konzentration von Fremdgas in dem Behälter 1 weiter erhöht.

Die Intensität der Dampfströmung hängt von verschiedenen Parametern ab, wie z. B. das Druckverhältnis Kondensator 8 zu Behälter 1 und das Volumenverhältnis Kondensator 8 zu Behälter 1. Um die Dampfströmung zu verstärken, kann der Arbeitsdruck im Kondensator 8 kurzfristig erhöht werden. Das ist durch mehrere Wege möglich wie z.B. Drosselung des Rückkühlvolumenstroms oder aktives Aufheizen des Kondensators 8. Diese Druckerhöhung bleibt aber immer im Vakuumbereich. Es ist jedoch bevorzugt, den Vakuumbehälter 1 mittels einem Kühlelement 4 zu kühlen und die Temperatur des Behälters 1 unter, gleich oder ähnlich der Temperatur in der Kondensator-Einheit zu halten. Ferner kann es vorteilhaft sein, wenn zwischen Vakuumbehälter 1 und Verdampfer-Einheit 11 ein Verbindungsmittel 13 mit ggf. einem Bauteil (z. B. einem Ventil) vorliegt. Da der Druck in der Verdampfer-Einheit 11 niedriger als der im Behälter 1 ist, verdampft das in dem Behälter 1 vorliegende flüssige Kältemittel 7, wenn eine Verbindung zwischen Behälter 1 und Verdampfer 11 besteht. Das dampfförmige Kältemittel strömt in den Verdampfer. Bei dem Prozess der Verdampfung, nimmt das Kältemittel Wärmeenergie von dem Behälter 1 auf und kühlt diesen.

Die Kühlung des Behälters 1 kann weiterhin dadurch erfolgen, dass flüssiges Kältemittel aus dem Kondensator 8 in ein wärmeübertragendes Element geleitet wird, welches in einem wärmeleitenden Kontakt mit dem Behälter vorliegt. Das heißt, es ist bevorzugt, dass ein Kühlelement ein wärmeleitendes oder wärmeübertragendes Element ist, welches im Sinne der Erfindung auch als wärmeleitende Verbindung oder Wärmeübertrager bezeichnet werden kann. Beispiele für Wärmeübertrager umfassen insbesondere Vorrichtungen, die eine große Fläche aufweisen und an dem Behälter angebracht sind (z. B. eine Rohrschlange). Dem Fachmann sind solche Wärmeübertrager bekannt. In der Fig. 5 ist eine solche Rohrschlange 14 beispielhaft gezeigt, wobei die Erfindung nicht auf diese beschränkt ist. Die Rohrschlange 14 ist an dem Behälter 1 angeordnet und wird bevorzugt von flüssigen Kältemittel aus dem Kondensator 8 durchströmt. Das flüssige Kältemittel kann aus der Rohrschlange 14 in die Verdampfer-Einheit 11 geleitet werden, so dass die Verbindung zwischen Kondensator-Einheit 8 und Verdampfer 11 als Kondensatrückführung fungieren kann.

Der nächste Schritt ist, dass nach bestimmter Zeit, wenn sich genug Inertgas in dem Behälter gesammelt hat, das Inertgas aus dem Behälter 1 zu entfernen. Dies kann beispielsweise durch Aufheizen des Behälters oder mittels einer Vakuumpumpe erfolgen. Durch das Aufheizen wird in dem Behälter 1 ein umgebungsbezüglicher Überdruck erzeugt. Dann können dampfförmiges Kältemittel und Inertgas über eine Ablasseinrichtung 3 an die Umgebung abgeführt werden. Während dieses Prozesses ist vorzugsweise die Verbindung zwischen Behälter 1 und Kondensator 8 gesperrt. Nach diesem Schritt wird der Behälter 1 gekühlt (aktiv oder passiv) und der Prozess kann wiederholt werden. Die Häufigkeit des Verfahrens hängt von der Auslegung des Systems ab.

Das in dem Behälter 1 gesammelte flüssige Kältemittel 7 kann durch verschiedene Wege entfernt werden. Es kann beispielsweise durch Erwärmung des Behälters 1 verdampfen und im Kondensator 8 kondensieren. Eine weitere Möglichkeit ist, das flüssige Kältemittel 7 durch eine Verbindung zwischen dem Sumpf an flüssigen Kältemittel 7 im Behälter 1 und dem Kondensator 8 zurückzuführen. Es ist auch möglich, dass de Behälter 1, neben dem Kondensator 8, so positioniert wird, dass die Menge des flüssigen Kältemittels 7, welches sich in dem Behälter 1 sammelt, sehr klein ist.

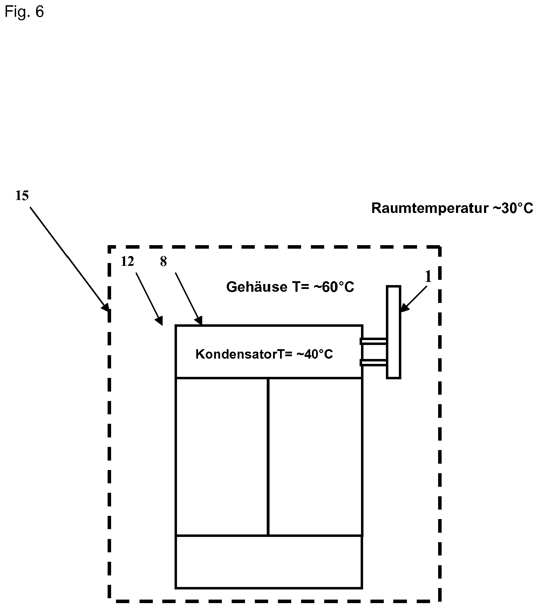

Fig. 6 zeigt eine zuvor dargestellte Adsorptionskältemaschine mit einem Gehäuse. Es hat sich gezeigt, dass unter einem Gehäuse 15, in dem eine Adsorptionskältemaschine 12 angeordnet ist, Temperaturen von circa 60° Celsius oder mehr (siehe Fig. 6, Gehäuse T=) herrschen können, auch wenn die Raumtemperatur nur circa 30 ° Celsius oder weniger beträgt. Die genannten Temperaturen dienen lediglich der Illustration und sind lediglich beispielhaft aufgeführt. Die Erfindung ist nicht auf diese Temperaturen beschränkt. Der Behälter 1 nimmt die Temperatur unter dem Gehäuse 15 an, da er außerhalb der Adsorptionskältemaschine aber unter dem Gehäuse 15 angeordnet ist. Für den Fall, dass die Kondensator-Einheit 8 beispielsweise eine Temperatur von circa 40° Celsius (siehe Fig. 6, Kondensator T=) aufweist, kann kein Inertgas aus dem Kondensator 8 in den Behälter 1 strömen, da der Druck im Kondensator 8 niedriger als im Behälter 1 ist. Dieser Fall kann durch die im Stand der Technik beschriebenen Vorrichtungen oder Verfahren nicht gelöst werden, so dass kein Inertgas aus der Maschine entfernt werden kann. Erfindungsgemäß ist jedoch eine Kühlung des Behälters 1 vorgesehen, so dass der Druck im Behälter 1 vorzugsweise immer niedriger als im Kondensator 8 ist und eine Evakuierung des Inertgases aus der Adsorptionskältemaschine und ein konstanter Betrieb dieser gewährleistet ist.

### Bezugszeichenliste

- 1: Vakuumbehälter
- 2: Verbindungsmittel zur Kondensator-Einheit
- 3: Ablasseinrichtung
- 4: Kühlelement
- 5: Verbindungsmittel zur Verdampfer-Einheit
- 6: Weitere Verbindungsmittel zur Kondensator-Einheit
- 7: Flüssiges Kältemittel
- 8: Kondensator-Einheit
- 9: Adsorber-Einheit
- 10: Desorber-Einheit
- 11: Verdampfer-Einheit
- 12: Adsorptionskältemaschine
- 13: Verbindungsmittel zur Verdampfer-Einheit
- 14: Rohrschlange
- 15: Gehäuse

## Patentansprüche

1. Adsorptionskältemaschine, umfassend mindestens eine Adsorber- / Desorber-Einheit, eine Verdampfer- / Kondensator-Einheit und einen Vakuumbehälter
**dadurch gekennzeichnet, dass**
der Vakuumbehälter über dampfoffene Verbindungsmittel mit einer Kondensator-Einheit der Adsorptionskältemaschine verbunden ist und der Vakuumbehälter eine Ablasseinrichtung und mindestens ein Kühlelement aufweist, wobei in dem Verbindungsmittel mindestens ein Bauteil zur Absperrung oder Regelung des Durchflusses von Fluiden vorliegt.

2. Adsorptionskältemaschine nach Anspruch 1,
**dadurch gekennzeichnet, dass**
ein Verbindungsmittel zwischen Vakuumbehälter und Verdampfer-Einheit vorliegt.

3. Adsorptionskältemaschine nach Anspruch 1 oder 2,
**dadurch gekennzeichnet, dass**
das Kühlelement ausgewählt ist aus der Gruppe umfassend,
a. Kühlung mit dem Kondensat aus dem Kondensator, insbesondere
i. mittels eines wärmeübertragenden Elements oder
ii. der Einbringung von flüssigen Kältemittel aus der Kondensator-Einheit in den Vakuumbehälter
b. Kühlgebläse
c. Dampfoffene Verbindung zwischen Vakuumbehälter und einer Verdampfer-Einheit der Adsorptionskältemaschine
d. Peltier Element
e. Wärmeübertragende Verbindung des Vakuumbehälters mit einem Rückkühlkreis der Adsorptionskältemaschine
f. Wärmeübertragende Verbindung zu einem Kältekreis der Adsorptionskältemaschine
g. Aktives Kälteerzeugungsgerät.

4. Adsorptionskältemaschine nach einem oder mehreren der vorhergehenden Ansprüche
**dadurch gekennzeichnet, dass**
das Bauteil ausgewählt ist aus der Gruppe umfassend Durchgangsventil, Eckventil, Schrägsitzventil, Magnetventil, Rückschlagklappe oder Schwimmkörper.

5. Adsorptionskältemaschine nach einem oder mehreren der vorherigen Ansprüche,
**dadurch gekennzeichnet, dass**
das Bauteil manuell-, automatisch- oder selbstregulierend ist.

6. Adsorptionskältemaschine nach einem oder mehreren der vorherigen Ansprüche,
**dadurch gekennzeichnet, dass**
die Ablasseinrichtung als Ventil, insbesondere Überdruckventil oder Evakuierungsventil ausgestaltet ist.

7. Adsorptionskältemaschine nach einem oder mehreren der vorherigen Ansprüche,
**dadurch gekennzeichnet, dass**
an dem Vakuumbehälter ein Heizelement vorliegt.

8. Adsorptionskältemaschine nach einem oder mehreren der vorherigen Ansprüche,
**dadurch gekennzeichnet, dass**
mindestens ein weiteres Verbindungsmittel zwischen Kondensator-Einheit und Vakuumbehälter besteht, durch welches flüssiges Kondensat strömt.

9. Adsorptionskältemaschine nach einem oder mehreren der vorherigen Ansprüche,
**dadurch gekennzeichnet, dass**
das Verbindungsmittel ein Rohr oder eine Durchlassöffnung ist.

10. Verfahren zur Entfernung eines Inertgases aus einer Adsorptionskältemaschine, gemäß einem oder mehreren der Ansprüche 1 bis 9, umfassend die folgenden Schritte:
a. Kühlung des Vakuumbehälters durch das Kühlelement auf eine Temperatur, die niedriger, gleich oder ähnlich der der Kondensator-Einheit ist,
b. Einbringung eines dampfförmigen Kältemittels aus der Desorber-Einheit in die Kondensator-Einheit, wobei das Kältemittel in der Kondensator-Einheit zumindest teilweise kondensiert und sich das Inertgas im Kondensator sammelt,
c. Öffnung eines, zwischen der Kondensator-Einheit und dem Vakuumbehälter angeordneten Bauteils zur Absperrung oder Regelung des Durchflusses von Fluiden, wobei ein Inertgas und dampfförmiges Kältemittel aus der Kondensator-Einheit in den Vakuumbehälter strömt,
d. Entfernen des in dem Vakuumbehälter gesammelten Inertgases, wobei das in dem Vakuumbehälter gesammelte Inertgas
• durch eine Evakuierung des Vakuumbehälters und/oder
• durch Aufheizen des Vakuumbehälters durch ein Heizmittel, wobei durch den Gesamtdruck innerhalb des Vakuumbehälters eine Ablasseinrichtung manuell oder automatisch geöffnet wird und das Inertgas aus dem Vakuumbehälter strömt
entfernt wird.

11. Verfahren nach Anspruch 10, wobei die Öffnung im normalen Betrieb der Adsorptionskältemaschine bei Druckspitzen in der Kondensator-Einheit erfolgt.

12. Verfahren nach Anspruch 10 oder 11, wobei der Kondensator kurzzeitig erwärmt wird.

13. Verfahren nach einem oder mehreren der Ansprüche 10 bis 12, wobei das Bauteil durch den Dampfdruck in der Kondensator-Einheit, manuell, selbstregulierend oder automatisch geöffnet wird.

## Claims

1. An adsorption refrigeration machine, comprising at least one adsorber/desorber unit, one evaporator/condenser unit and one vacuum container
**characterized in that**
the vacuum container is connected to a condenser unit of the adsorption refrigeration machine via connecting means that are open to permit vapor to pass through, and the vacuum container has a discharge mechanism and at least one cooling element, wherein at least one component for shutting off or regulating the flow of fluids is provided in the connecting means.

2. The Adsorption refrigeration machine according to claim 1,
**characterized in that**
a connecting means is provided between the vacuum container and the evaporator unit.

3. The Adsorption refrigeration machine according to claim 1 or 2,
**characterized in that**
the cooling element is selected from the group comprising:
a. cooling with the condensate from the condenser, in particular:
i. by means of a heat exchange element or
ii. introducing liquid refrigerant from the condenser unit into the vacuum container;
b. cooling fan;
c. connection between the vacuum container and an evaporator unit of the adsorption refrigeration machine, the connection being open to permit vapor to pass through;
d. Peltier element;
e. heat exchange connection of the vacuum container with a recooling circuit of the adsorption refrigeration machine;
f. heat transfer connection to a refrigerant cycle of the adsorption refrigeration machine;
g. active refrigeration apparatus.

4. The Adsorption refrigeration machine according to any one or more of the preceding claims,
**characterized in that**
the component is selected from the group comprising through-valves, corner valves, Y-type valves, solenoid valves, non-return valves or floats.

5. The Adsorption refrigeration machine according to any one or more of the preceding claims,
**characterized in that**
the component is manually or automatically regulated or is self-regulating.

6. The Adsorption refrigeration machine according to any one or more of the preceding claims,
**characterized in that**
the discharge mechanism is designed as a valve, in particular as an excess pressure valve or an evacuation valve.

7. The Adsorption refrigeration machine according to any one or more of the preceding claims,
**characterized in that**
a heating element is present on the vacuum container.

8. The Adsorption refrigeration machine according to any one or more of the preceding claims,
**characterized in that**
at least one additional connecting means is provided between the condenser unit and the vacuum container, so that liquid condensate flows through it.

9. The vacuum container according to any one or more of the preceding claims,
**characterized in that**
the connecting means is a pipe or a through-opening.

10. A method of removing an inert gas from an adsorption refrigeration according to any one or more of the claims 1 -9, comprising the following steps:
a. cooling the vacuum container by the cooling element to a temperature, which is lower than, the same as or similar to the condenser unit,
b. introducing a refrigerant in the form of vapor out of the desorber unit into the condenser unit such that the refrigerant is at least partially condensed in the condenser unit and the inert gas collects in the condenser,
c. opening a component situated between the condenser unit and the vacuum container for shutting off or regulating the flow of fluids such that an inert gas and a refrigerant in vapor form flow out of the condenser unit and into the vacuum container,
d. removing the inert gas collected in the vacuum container, wherein
the inert gas collected in the vacuum container is removed
• by evacuation of the vacuum container and/or
• by heating the vacuum container by a heating means, whereby the total pressure within the vacuum container causes a discharge device to be opened manually or automatically and the inert gas flows out of the vacuum container.

11. The method according to claim 10,
wherein the opening takes place with pressure peaks in the condenser unit during normal operation of the adsorption refrigeration machine.

12. The method according to claim 10 or 11,
wherein the condenser is heated briefly.

13. The method according to any one or more of the claims 10 to 12,
wherein the component is opened manually or automatically or by a self-regulating method.

## Revendications

1. Machine frigorifique à adsorption, comprenant au moins un groupe adsorbeur/désorbeur, un groupe évaporateur/condenseur et une cuve à vide,
**caractérisée en ce que**
la cuve à vide est reliée à un groupe condenseur de la machine frigorifique à adsorption par l'intermédiaire de moyens de liaison laissant passer la vapeur et la cuve à vide comporte un dispositif de décharge et au moins un élément de refroidissement, dans laquelle le moyen de liaison renferme au moins une pièce destinée à bloquer ou à réguler le débit de fluides.

2. Machine frigorifique à adsorption selon la revendication 1,
**caractérisée en ce**
**qu'**il existe un moyen de liaison entre la cuve à vide et le groupe évaporateur.

3. Machine frigorifique à adsorption selon la revendication 1 ou 2,
**caractérisée en ce que**
l'élément de refroidissement est choisi dans le groupe comprenant,
a. le refroidissement avec le condensat du condenseur, en particulier
i. au moyen d'un élément de transfert de chaleur ou
ii. par l'introduction d'un réfrigérant liquide du groupe condenseur vers la cuve à vide
b. un ventilateur
c. une liaison laissant passer la vapeur entre la cuve sous vide et un groupe évaporateur de la machine frigorifique à adsorption
d. un élément Peltier
e. une liaison de transfert de chaleur de la cuve sous vide avec un circuit de refroidissement par recyclage de la machine frigorifique à adsorption
f. une liaison de transfert de chaleur avec un circuit de refroidissement de la machine frigorifique à adsorption
g. un dispositif de réfrigération actif.

4. Machine frigorifique à adsorption selon une ou plusieurs des revendications précédentes,
**caractérisée en ce que**
la pièce est choisie dans le groupe comprenant une vanne traversante, une vanne d'angle, une vanne à siège incliné, une électrovanne, un clapet anti-retour ou un flotteur.

5. Machine frigorifique à adsorption selon une ou plusieurs des revendications précédentes,
**caractérisée en ce que**
la pièce est à régulation manuelle ou automatique ou est autorégulée.

6. Machine frigorifique à adsorption selon une ou plusieurs des revendications précédentes,
**caractérisée en ce que**
le dispositif de décharge est conçu comme une soupape, en particulier une soupape de surpression ou une soupape d'évacuation.

7. Machine frigorifique à adsorption selon une ou plusieurs des revendications précédentes,
**caractérisée en ce que**
la cuve à vide comporte un élément chauffant.

8. Machine frigorifique à adsorption selon une ou plusieurs des revendications précédentes,
**caractérisée en ce**
**qu'**il existe au moins un autre moyen de liaison entre le groupe condenseur et la cuve à vide, par lequel s'écoule le condensat liquide.

9. Machine frigorifique à adsorption selon une ou plusieurs des revendications précédentes,
**caractérisée en ce que**
le moyen de liaison est un tube ou une ouverture de passage.

10. Procédé d'élimination d'un gaz inerte d'une machine frigorifique à adsorption selon une ou plusieurs des revendications 1 à 9, comprenant les étapes suivantes :
a. refroidissement de la cuve à vide par l'élément de refroidissement à une température inférieure, égale ou similaire à celle du groupe condenseur,
b. introduction d'un réfrigérant à l'état gazeux du groupe désorbeur vers le groupe condenseur, dans lequel le réfrigérant se condense au moins partiellement dans le groupe condenseur et le gaz inerte s'accumule dans le condenseur,
c. ouverture d'une pièce disposée entre le groupe condenseur et la cuve à vide pour bloquer ou réguler le débit de fluides, dans lequel un gaz inerte et du réfrigérant à l'état gazeux s'écoulent du groupe condenseur à la cuve à vide,
d. élimination du gaz inerte accumulé dans la cuve à vide, dans lequel
le gaz inerte accumulé dans la cuve à vide est éliminé
• par une évacuation de la cuve à vide et/ou
• par le chauffage de la cuve à vide à l'aide d'un moyen chauffant, dans lequel un dispositif de décharge est ouvert manuellement ou automatiquement par la pression totale régnant à l'intérieur de la cuve à vide et le gaz inerte sort de la cuve à vide.

11. Procédé selon la revendication 10, dans lequel l'ouverture a lieu pendant le fonctionnement normal de la machine frigorifique à adsorption à des pics de pression dans le groupe condenseur.

12. Procédé selon la revendication 10 ou 11, dans lequel le condensateur est brièvement chauffé.

13. Procédé selon une ou plusieurs des revendications 10 à 12, dans lequel la pièce est ouverte par la pression de vapeur dans le groupe condenseur, manuellement, de manière autorégulée ou automatiquement.
